(19)

Europäisches
Patentamt
European
Patent Office
Office européen
des brevets

(11) **EP 2 037 607 A1**

(12) **EUROPEAN PATENT APPLICATION**
published in accordance with Art. 153(4) EPC

(43) Date of publication:
**18.03.2009 Bulletin 2009/12**

(51) Int Cl.:
***H04J 11/00*** *(2006.01)*     ***H04B 7/005*** *(2006.01)*

(21) Application number: **07744153.3**

(22) Date of filing: **25.05.2007**

(86) International application number:
**PCT/JP2007/060719**

(87) International publication number:
**WO 2007/139026 (06.12.2007 Gazette 2007/49)**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **25.05.2006 JP 2006145145**

(71) Applicant: **Sharp Kabushiki Kaisha
Osaka-shi, Osaka 545-8522 (JP)**

(72) Inventors:
• **NANBA, Hideo
Chiba 266-0005 (JP)**

• **HAMAGUCHI, Yasuhiro
Chiba 290-0056 (JP)**
• **TO, Shimpei
55 Avenue de Cannes
Juan les Pins
Antibes 06160 (FR)**

(74) Representative: **Müller - Hoffmann & Partner
Patentanwälte
Innere Wiener Strasse 17
81667 München (DE)**

(54) **RECEIVER AND PROPAGATION PATH ESTIMATION METHOD**

(57)     An extrapolation method to suppress degradation of characteristics of channel estimation is provided.

A receiver 100 includes: a fast Fourier transform section (FFT section) 101 for subjecting a multicarrier symbol modulated by a known code to fast Fourier transform so as to calculate first frequency information on each subcarrier; a division section for complex dividing the first frequency information with the known code so as to calculate second frequency information on each subcarrier; a subcarrier interpolation section 103, based on the second frequency information, for generating interpolation frequency information by calculating (1) an amplitude value at which the amplitude values of a plurality of pieces of information to be interpolated are identical and (2) one of the phase differences equal to a phase difference of signal points between two subcarriers as a phase difference of a plurality of pieces of information to be interpolated or a combination them, and interpolating the generated interpolation frequency information to second frequency information so as to calculate third frequency information; and an inverse fast Fourier transform section (IFFT section) 104 for subjecting the third frequency information to inverse fast Fourier transform.

FIG. 1

## Description

Technical Field

The present invention relates to a receiver that receives multicarrier symbols to estimate a channel and a demodulation method.

Background Art

A method called a time window method, which is one method of improving characteristics when determining a delay profile to estimate a channel, will be described. A configuration overview of an embodiment of the time window method is provided as shown below. A receiver subjects received CE (Channel Estimation) symbols to fast Fourier transform so as to convert a time axis signal to a frequency axis signal. Next, the receiver complex-divides the received CE symbols with a code used for CE symbol transmission. When the amplitude of code used in CE symbols is one, a multiplication of complex conjugate can be used in place of the complex division. In a description that follows, the amplitude of code used in CE symbols is assumed to be one, a complex conjugate of code for CE symbol transmission is generated, and the received CE symbols subjected to fast Fourier transform is multiplied by the generated complex conjugate, thus converting the frequency axis signal to a frequency response of channel.

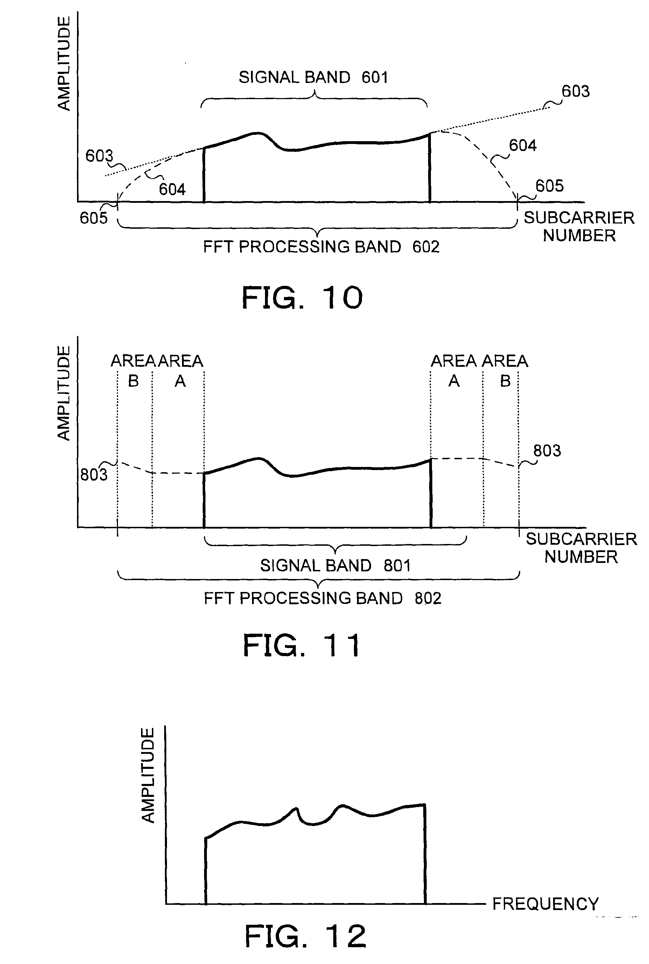

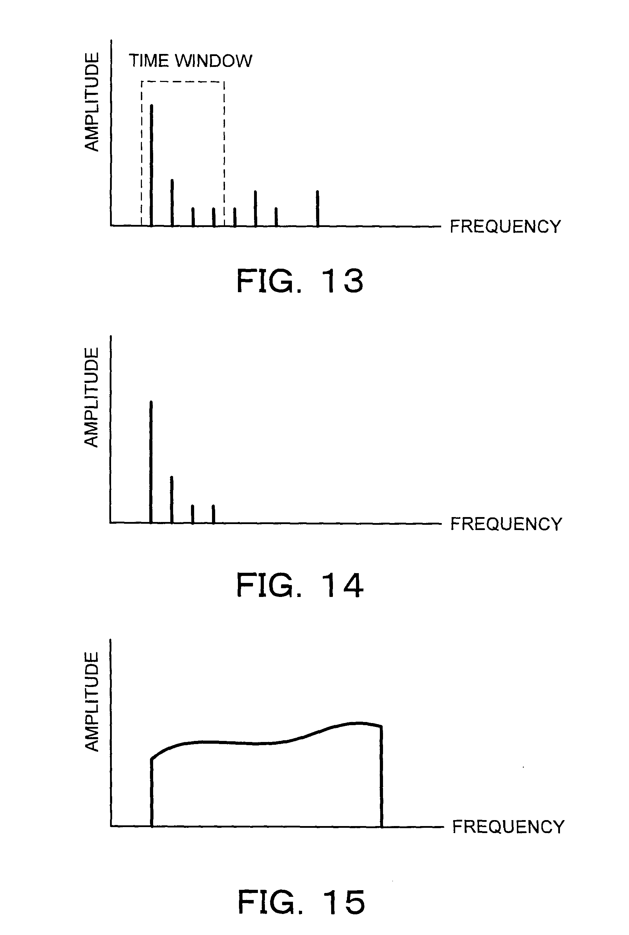

An example of frequency response here is shown in FIG. 12. A frequency response in this stage contains noise and interference in the frequency response of a channel. The frequency response is subjected to inverse fast Fourier transform to be converted to a time axis signal. A signal after conversion to the time axis direction is an impulse response, that is, a delay profile and contains noise and interference. An example of the impulse response is shown in FIG. 13. An impulse response by CE symbols is concentrated within a time determined when a radio circuit was designed in advance, that is, a time corresponding to a guard interval and interference or noise components are distributed in other intervals. Thus, only data in the interval in which an impulse response is concentrated, generally within a time corresponding to the guard interval is cut out using a time window to reduce interference and noise components. An example of impulse response after time window processing is performed is shown in FIG. 14. Conversion of impulse response obtained after time window processing to a frequency axis signal by an FFT section yields a frequency response whose interference and noise are reduced. An example of frequency response whose interference and noise are reduced is shown in FIG. 15.

While the time window method has excellent characteristics (characteristics of channel estimation and performance of channel estimation) capable of reliably reducing a certain amount of interference and noise by a time window, but if used in an environment in which the number of FFT/IFFT processing points and the number of subcarriers used for communication are different, there is a problem that characteristics of channel estimation deteriorates in a high SNR (Signal to Noise Ratio) area. This problem will be described below.

When viewed from the frequency axis, time window processing is convolution processing of a frequency spectrum of signal to which the time window is applied and a frequency spectrum of the time window. This aspect is shown in FIG. 16 to FIG. 18. FIG. 16 shows a spectrum of signal to which the time window is applied, FIG. 17 shows a spectrum of signal of the time window, and FIG. 18 shows a spectrum obtained by convolution of the signal to which the time window is applied and the signal of time window. As is evident from FIG. 18, distortion occurs at band ends where the signal becomes discontinuous. This distortion causes a problem in a high SNR area to deteriorate characteristics (performance) of channel estimation.

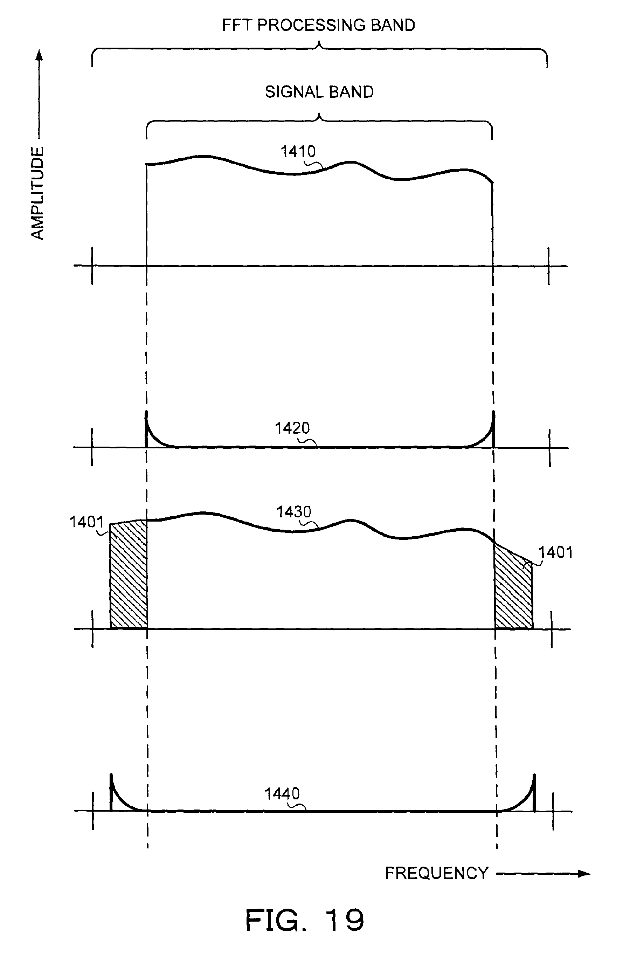

As a method of reducing this distortion at signal band ends, a method by which extrapolation processing is performed to areas outside the signal band before time window processing and then time window processing is performed is known. The extrapolation processing is most effective when performed on all unused points, but if a value to be extrapolated contains an error, distortion occurs in the signal band, deteriorating characteristics of channel estimation. In such a case, there is no need to extrapolate all unused points and extrapolating only several points near signal band ends produces an effect. This will be described using FIG. 19. FIG. 19 is a diagram showing an example of interpolation of a spectrum of a received signal to which a time window is applied.

In FIG. 19, the amplitude denoted by reference numeral 1410 is an example of spectrum of the received signal to which the time window method is applied. It is assumed that the number of subcarriers (signal band) of the signal is smaller than that of FFT processing points (FFT processing band). The amplitude denoted by reference numeral 1420 in FIG. 19 shows an estimated error in the frequency domain that occurs when the time window method is applied to the signal. The estimated error is concentrated on band ends of the signal band. The amplitude denoted by reference numeral 1430 in FIG. 19 shows an example when extrapolation processing is performed on several points near signal band ends for the received signal. Diagonally shaded areas to which reference numeral 1401 is attached are extrapolated portions. The amplitude denoted by reference numeral 1440 in FIG. 19 shows an estimated error in the frequency domain when the time window method is applied to the extrapolated signal. Since the estimated error is concentrated on signal band ends including extrapolated portions, the error of the signal band actually used is reduced so that deterioration of characteristics of channel estimation can be prevented.

Linear interpolation is frequently used as the extrapolation processing. Processing to smoothly connect signals after interpolation is sometimes performed (Non-Patent Document 1).

Non-Patent Document 1: IEICE (Institute of Electronics, Information and Communications Engineers) general convention in 2006 B-5-94 OFDM channel estimation method using virtual waveform addition, March 8, 2006, p. 447

Non-Patent Document 2: IEICE (Institute of Electronics, Information and Communications Engineers) general convention in 2006 B-5-93 Discussion about distortion when the channel is estimated by the time window method, March 8, 2006, p. 446

Disclosure of the Invention

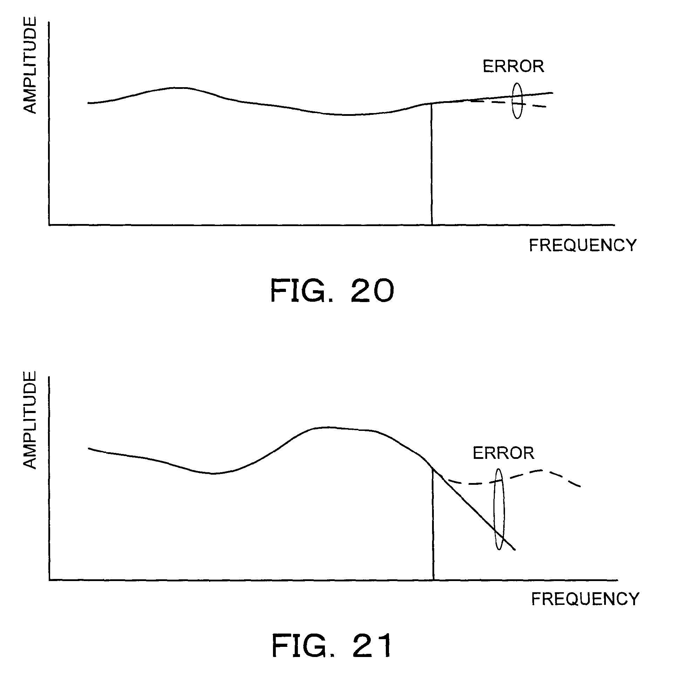

However, an estimated error tends to become larger in extrapolation portions if, when extrapolation processing is performed, delay spread of a channel is large. If delay spread is small, fluctuations in the frequency domain are small and therefore, an error is small when the channel outside the band is estimated. FIG. 20 shows an example of an estimated error in an extrapolation portion when delay spread is small. The solid line denotes the amplitude after extrapolation processing is performed and the dotted line denotes the amplitude of a channel. Conversely if delay spread is large, fluctuations in the frequency domain become large and therefore, an error when the channel outside the signal band is estimated tends to become large. FIG. 21 shows an example of an estimated error in an extrapolation portion when delay spread is large. The error tends to become larger with an increasing distance from the signal band end, which signifies that an error tends to become larger in number with an increasing number of extrapolation points.

If the time window is applied when an error in the extrapolation portion is large, distortion due to an error in the extrapolation portion affects the signal band, deteriorating characteristics of channel estimation.

A method of changing the extrapolation number by estimating delay spread shown in Non-Patent Document 2 is known as a technology to reduce an influence of an estimated error in an extrapolation portion when delay spread is large. However, this method requires determination of correlation coefficients to estimate delay spread, posing a problem of an enormous amount of computation required.

The present invention has been developed in view of the above circumstances and an object thereof is, in a receiver receiving multicarrier symbols, to provide a receiver that performs extrapolation processing to suppress an occurrence of distortion at ends of a signal band to which a signal is allocated and a channel estimation method.

(1) A receiver according to the present invention is a receiver receiving a multicarrier symbol modulated by a known code, comprising: a fast Fourier transform section for subjecting the multicarrier symbol to fast Fourier transform so as to calculate first frequency information on each subcarrier included in a signal band to which a signal is allocated; a division section for complex dividing the first frequency information with the known code so as to calculate second frequency information on each subcarrier; a subcarrier interpolation section for calculating an amplitude value at which the amplitude values of a plurality of pieces of information to be interpolated are identical based on the second frequency information, generating interpolation frequency information to interpolate information on frequencies to which no signal is allocated using the calculated amplitude value, and interpolating the generated interpolation frequency information to the second frequency information so as to calculate third frequency information; and an inverse fast Fourier transform section for subjecting the third frequency information to inverse fast Fourier transform.

Thus, a receiver according to the present invention can calculate appropriate extrapolation data while reducing the amount of computation of data to be extrapolated by calculating an amplitude value at which the amplitude values of a plurality of pieces of information to be interpolated are identical based on second frequency information and calculating data to be extrapolated using the calculated amplitude value. Accordingly, deterioration of characteristics of channel estimation can be suppressed by estimating extrapolation data using data of subcarriers at signal band ends and the amplitude value of the equal amplitude. Also, an occurrence of distortion at ends of a signal band to which a signal is allocated can be suppressed. Further, the amount of computation required for such a series of processing is very small when compared with a conventional technology and therefore, loads of processing can be reduced.

(2) The receiver according to the present invention is characterized in that the subcarrier interpolation section calculates a phase difference equal to that of signal points between two subcarriers as a phase difference of a plurality pieces of information to be interpolated based on the second frequency information so as to generate interpolation frequency information to interpolate information of frequencies to which no signal is allocated using the calculated amplitude value and the phase difference.

Thus, a receiver according to the present invention can calculate appropriate extrapolation data while reducing the amount of computation of data to be extrapolated by calculating a phase difference that is equal to that of signal points between two subcarriers as a phase difference of a plurality of pieces of information to be interpolated based on the second frequency information and calculating data to be extrapolated using the amplitude value and the phase difference. Accordingly, deterioration of characteristics of channel estimation can be suppressed by estimating extrapolation data using the same phase difference as a phase difference formed by data of a plurality of subcarriers at signal band ends. Also, an occurrence of distortion at ends of a signal band to which a signal is allocated can be suppressed. Further, the amount of computation required for such a series of processing is very small when compared with a conventional technology and therefore, loads of processing can be reduced.

(3) Also, a receiver according to the present invention is a receiver receiving a multicarrier symbol modulated by a known code, comprising: a fast Fourier transform section for subjecting the multicarrier symbol to fast Fourier transform so as to calculate first frequency information on each subcarrier included in a signal band to which a signal is allocated; a division section for complex dividing the first frequency information with the known code so as to calculate second frequency information on each subcarrier; a subcarrier interpolation section for calculating a phase difference equal to that of signal points between two subcarriers as a phase difference of a plurality of pieces of information to be interpolated based on the second frequency information, generating interpolation frequency information to interpolate information on frequencies to which no signal is allocated using the calculated phase difference, and interpolating the generated interpolation frequency information to the second frequency information so as to calculate third frequency information; and an inverse fast Fourier transform section for subjecting the third frequency information to inverse fast Fourier transform.

Thus, a receiver according to the present invention can calculate appropriate extrapolation data while reducing the amount of computation of data to be extrapolated by calculating a phase difference equal to that of signal points between two subcarriers as a phase difference of a plurality of pieces of information to be interpolated based on the second frequency information. Accordingly, deterioration of characteristics of channel estimation can be suppressed by estimating extrapolation data using the same phase difference as a phase difference formed by data of a plurality of subcarriers at signal band ends. Also, an occurrence of distortion at ends of a signal band to which a signal is allocated can be suppressed. Further, the amount of computation required for such a series of processing is very small when compared with a conventional technology and therefore, loads of processing can be reduced.

(4) The receiver according to the present invention is characterized in that the subcarrier interpolation section calculates the value at a signal point at the signal band end as the interpolation frequency information.

Thus, the subcarrier interpolation section can calculate extrapolation data based on frequency information approximating a channel environment of subcarriers to be interpolated by using the value at a signal point at the signal band end. Accordingly, an occurrence of distortion at ends of a signal band to which a signal is allocated is suppressed.

(5) Further, the receiver according to the present invention is characterized in that the subcarrier interpolation section determines the number of subcarriers to interpolate information as an interpolation number based on an inclination between a signal point of a subcarrier near the signal band end and that of another subcarrier so as to generate information to interpolate as many subcarriers as the determined interpolation number as the interpolation frequency information.

Thus, the subcarrier interpolation section can calculate extrapolation data based on frequency information approximating a channel environment of subcarriers to be interpolated by calculating the inclination using a signal point at a signal band end and that of another subcarrier. Accordingly, an occurrence of distortion at ends of a signal band to which a signal is allocated is suppressed.

(6) The receiver according to the present invention is characterized in that the subcarrier interpolation section includes: a selecting section for selecting information to be a reference for calculating the interpolation frequency information from the second frequency information; a generating section for calculating the amplitude value based on information selected by the selecting section so as to generate interpolation frequency information; and an adding section for adding the generated interpolation frequency information to the second frequency information so as to calculate third frequency information.

Thus, in the subcarrier interpolation section, the selecting section determines to select information on a subcarrier depending on its distance from a signal band end, based on a channel environment, and selects appropriate information from the second frequency information. The generating section generates interpolation frequency information by calculating the amplitude value based on the information selected by the selecting section. Accordingly, it becomes possible to suppress deterioration of characteristics of channel estimation and also to perform appropriate extrapolation processing with a small amount of computation.

(7) The receiver according to the present invention is characterized in that the subcarrier interpolation section includes: a selecting section for selecting information to be a reference for calculating the interpolation frequency information from the second frequency information and information to be a reference for determining the interpolation number; an interpolation number determining section for calculating the inclination based on information to be a reference for determining the interpolation number selected by the selecting section so as to determine the interpolation number; a generating section for calculating the amplitude value corresponding to the determined interpolation number based on information to be a reference for calculating the interpolation frequency information selected by the selecting section so as to generate interpolation frequency information; and an adding section for adding the generated interpolation frequency information to the second frequency information so as to calculate third frequency information.

Thus, in the subcarrier interpolation section, the selecting section determines to select information on a subcarrier depending on its distance from a signal band end, based on a channel environment, and selects frequency information on subcarriers necessary to determine the interpolation number, as well as selecting appropriate information from the second frequency information. Information to be a reference for determining the interpolation number selected by the selecting section and information to be a reference for calculating the interpolation frequency information may result in the same information or the same information may be adopted from the beginning. Accordingly, it becomes possible to suppress deterioration of characteristics of channel estimation and also to perform appropriate extrapolation processing with a small amount of computation.

(8) The receiver according to the present invention is characterized in that the subcarrier interpolation section divides a band of frequencies to which the signal is not allocated into a plurality of areas so as to generate the interpolation frequency information using the amplitude value for at least one of the divided areas.

Thus, the subcarrier interpolation section can improve characteristics of channel estimation by dividing an extrapolation area into a plurality of areas and applying an extrapolation method using the amplitude value to a portion of the areas. For the divided extrapolation areas, extrapolation data that prevents deterioration of channel characteristics can be calculated by appropriately combining the amplitude value or values calculated by other methods. The subcarrier interpolation section can also control the amount of computation and prevent deterioration of channel estimation by determining the interpolation number.

(9) A receiver according to the present invention is a receiver receiving a multicarrier symbol modulated by a known code, comprising: a division section for subjecting the multicarrier symbol to fast Fourier transform, and complex dividing first frequency information on each subcarrier included in a signal band to which a signal is allocated so as to calculate second frequency information on each subcarrier; a subcarrier interpolation section for determining a number of subcarriers to interpolate information as an interpolation number based on an inclination between a signal point of a subcarrier near the signal band end and that of another subcarrier, and interpolating information to be interpolated to as many subcarriers as the determined interpolation number to the second frequency information so as to calculate third frequency information; and an inverse fast Fourier transform section for subjecting the third frequency information to inverse fast Fourier transform.

Thus, according to the present invention, extrapolation data can be calculated by determining the interpolation number to reduce the amount of computation of data to be extrapolated in accordance with a channel environment. Accordingly, it becomes possible to calculate extrapolation data with an appropriate amount of computation and to suppress deterioration of characteristics of channel estimation by selecting an appropriate interpolation number. Also, an occurrence of distortion at ends of a signal band to which a signal is allocated can be suppressed. Further, the amount of computation required for such a series of processing is very small when compared with a conventional technology and therefore, loads of processing can be reduced.

(10) The receiver according to the present invention is characterized in that the subcarrier interpolation section includes: a selecting section for selecting information to be a reference for determining the interpolation number from the second frequency information; an interpolation number determining section for calculating the inclination based on the information selected by the selecting section so as to determine the interpolation number; a generating section for calculating information on the interpolation number so as to generate interpolation frequency information; and an adding section for adding the generated interpolation frequency information to the second frequency information so as to calculate third frequency information.

Thus, in the subcarrier interpolation section, the selecting section determines to select information on a subcarrier depending on its distance from a signal band end, based on a channel environment, and selects frequency information on subcarriers necessary to determine the interpolation number. Accordingly, it becomes possible to suppress deterioration of characteristics of channel estimation and also to perform appropriate extrapolation processing with a small amount of computation.

(11) A channel estimation method according to the present invention is a channel estimation method of a receiving apparatus receiving a multicarrier symbol modulated by a known code, comprising the steps of: subjecting said multicarrier symbol to fast Fourier transform so as to calculate first frequency information on each subcarrier included in a signal band to which a signal is allocated; complex dividing said first frequency information with said known code so as to calculate second frequency information on each subcarrier; based on said second frequency information, using at least one of (1) calculating an amplitude value at which the amplitude values of a plurality of pieces of information to be interpolated are identical, and (2) calculating a phase difference equal to that of signal points between two subcarriers as a phase difference of a plurality of pieces of information to be interpolated, so as to generate interpolation frequency information to interpolate information on frequencies to which no signal is allocated; interpolating the generated interpolation frequency information to said second frequency information so as to calculate third frequency information; and subjecting said third frequency information to inverse fast Fourier transform.

Thus, according to a channel estimation method in the present invention, appropriate extrapolation data can be calculated while reducing the amount of computation of data to be extrapolated by calculating data to be extrapolated using any one or both of the <1> and the <2>. Accordingly, deterioration of characteristics of channel estimation can be suppressed by estimating extrapolation data using an amplitude equal to that of data of a subcarrier at a signal band end or the same phase difference as that formed by data of a plurality of subcarriers at a signal band end. Also, an occurrence of distortion at ends of a signal band to which a signal is allocated can be suppressed. Further, the amount of computation required for such a series of processing is very small when compared with a conventional technology and therefore, loads of processing can be reduced.

(12) A channel estimation method according to the present invention is a channel estimation method of a receiving apparatus receiving a multicarrier symbol modulated by a known code, comprising the steps of: subjecting the multicarrier symbol to fast Fourier transform; complex dividing first frequency information on each subcarrier included in a signal band to which a signal is allocated so as to calculate second frequency information on each subcarrier; determining a number of subcarriers to interpolate information as an interpolation number based on an inclination between a signal point of a subcarrier near the signal band end and that of another subcarrier; interpolating information to be interpolated to as many subcarriers as the determined interpolation number to the second frequency information so as to calculate third frequency information; and subjecting the third frequency information to inverse fast Fourier transform.

Thus, according to a channel estimation method in the present invention, extrapolation data can be calculated by determining the interpolation number to reduce the amount of computation of data to be extrapolated in accordance with a channel environment. Accordingly, it becomes possible to calculate extrapolation data with an appropriate amount of computation and to suppress deterioration of characteristics of channel estimation by selecting an appropriate interpolation number. Also, an occurrence of distortion at ends of a signal band to which a signal is allocated can be suppressed. Further, the amount of computation required for such a series of processing is very small when compared with a conventional technology and therefore, loads of processing can be reduced.

According to the present invention, a receiver receiving multicarrier symbols can perform extrapolation processing to suppress an occurrence of distortion at ends of a signal band to which a signal is allocated can be provided. Accordingly, deterioration of characteristics of channel estimation can be suppressed.

Brief Description of the Drawings

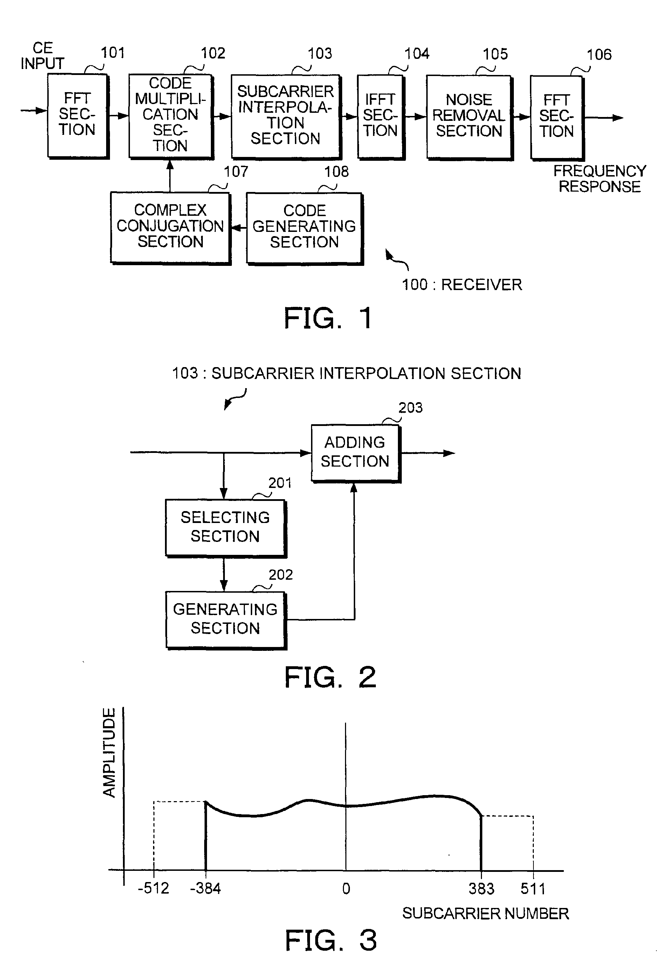

FIG. 1 is a block diagram showing an example of a component section related to channel estimation of a receiver in a first embodiment according to the present embodiment.

FIG. 2 is a block diagram showing a configuration example of a subcarrier interpolation section in the first embodiment.

FIG. 3 is a diagram showing an example of estimating extrapolation data outside a signal band using values at signal band ends.

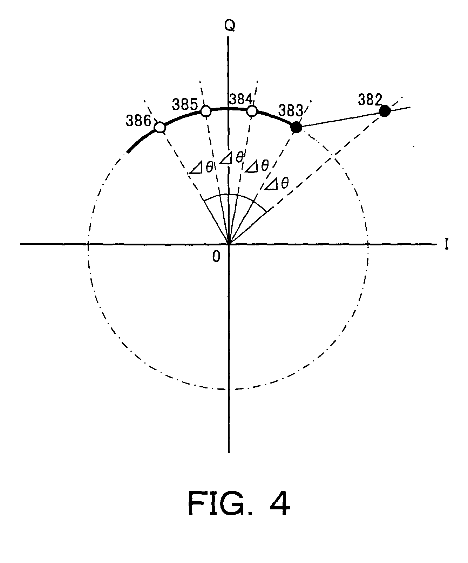

FIG. 4 is a diagram showing an example of estimating extrapolation data outside the signal band using values holding a phase difference at signal band ends.

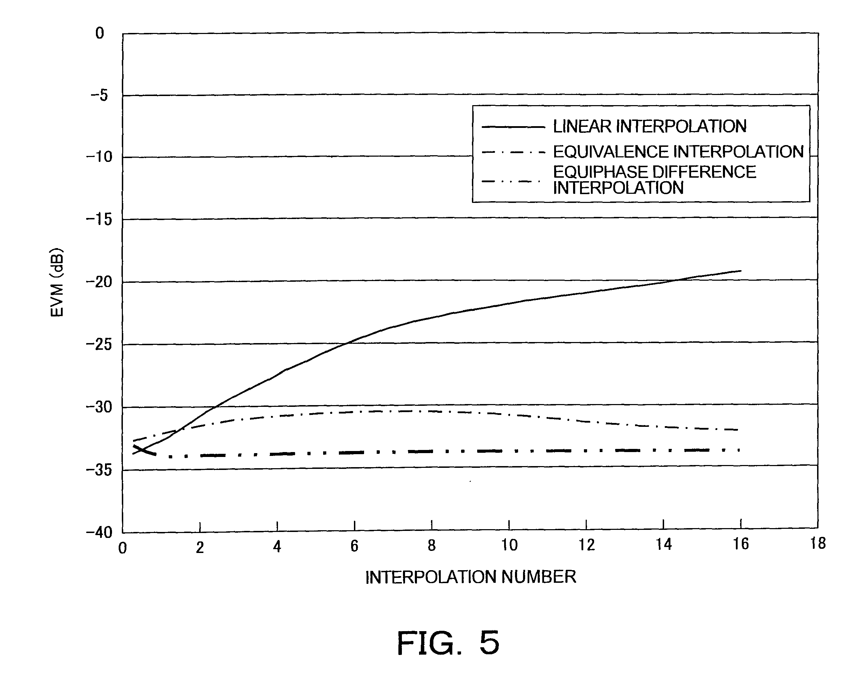

FIG. 5 is a diagram showing a characteristic example of general linear interpolation, equivalence interpolation using values at band ends, and equiphase difference interpolation maintaining a phase difference at band ends.

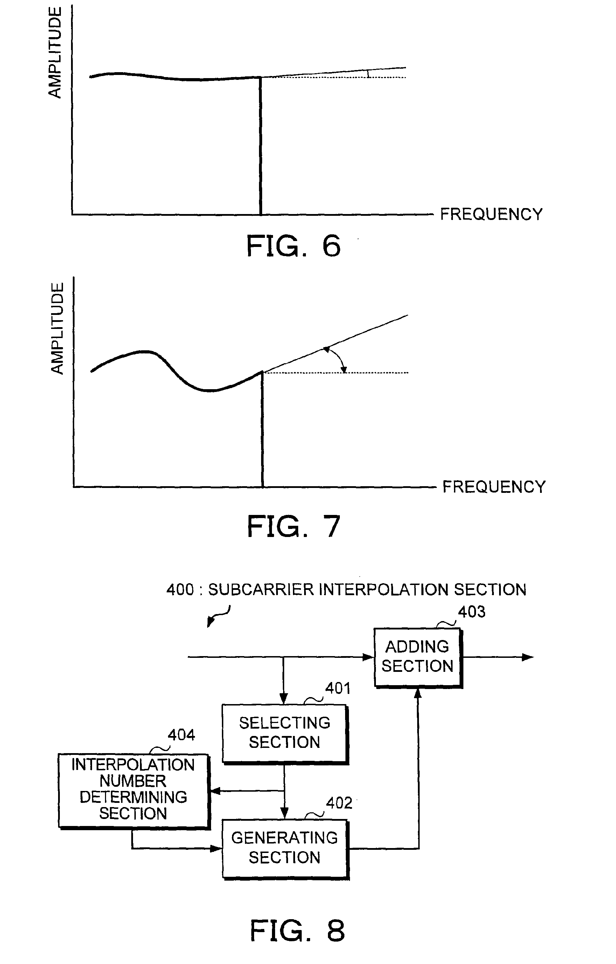

FIG. 6 is a diagram showing an example of the signal band when delay spread is small and an inclination at signal band ends is small.

FIG. 7 is a diagram showing an example of the signal band when delay spread is large and the inclination at signal band ends is large.

FIG. 8 is a block diagram showing a configuration example of a subcarrier interpolation section in a second embodiment.

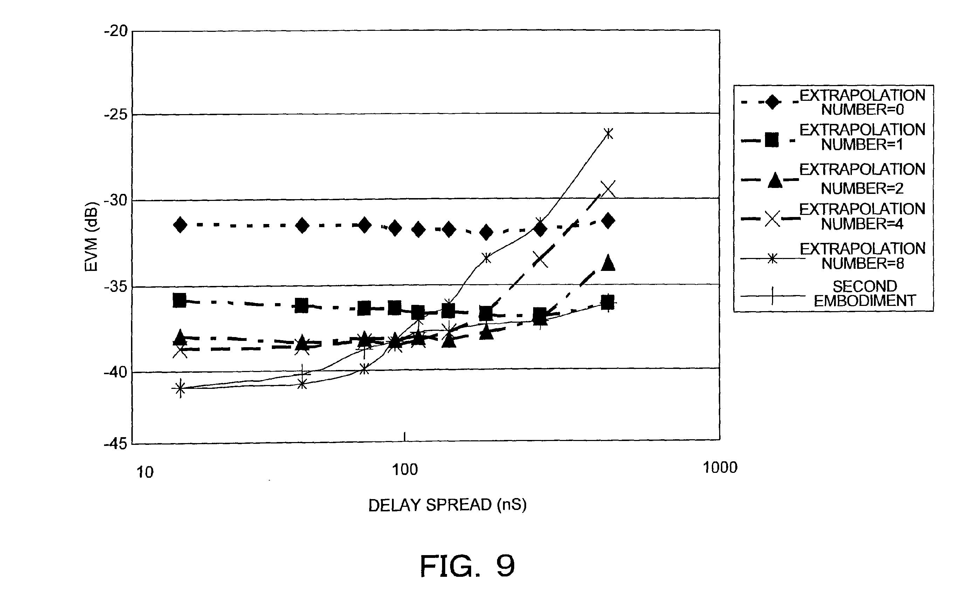

FIG. 9 is a diagram showing an example of simulation when the second embodiment is applied for linear interpolation.

FIG. 10 is a diagram showing a conventional example of estimating an extrapolation area between an FFT processing band and signal band.

FIG. 11 is a diagram showing an overview of estimating the extrapolation area between the FFT processing band and signal band in a third embodiment.

FIG. 12 is a diagram showing an example of frequency response.

FIG. 13 is a diagram showing an example of impulse response.

FIG. 14 is a diagram showing an example of impulse response after time window processing is performed.

FIG. 15 is a diagram showing an example of frequency response whose interference and noise are reduced.

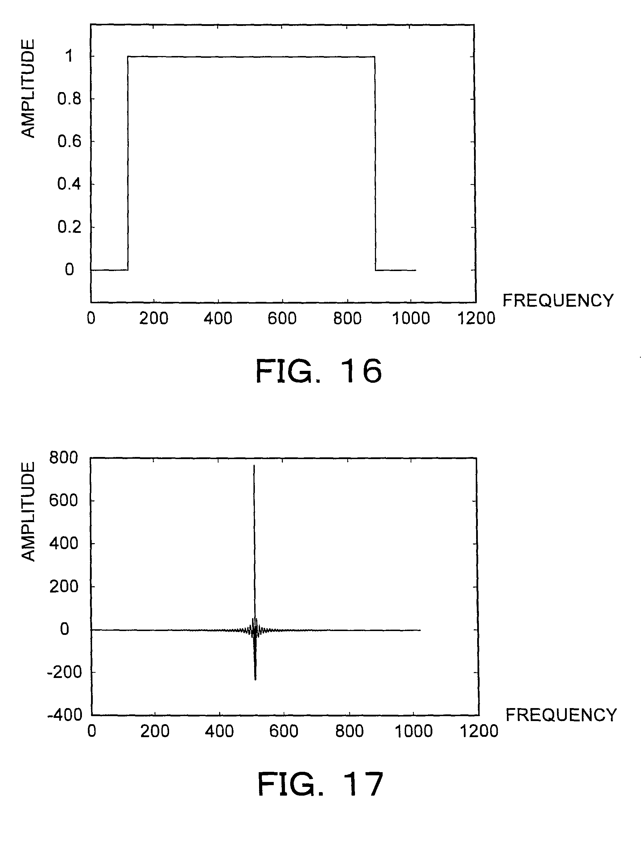

FIG. 16 is a diagram showing an example of a spectrum of signal to which a time window is applied.

FIG. 17 is a diagram showing an example of the spectrum of the time windows.

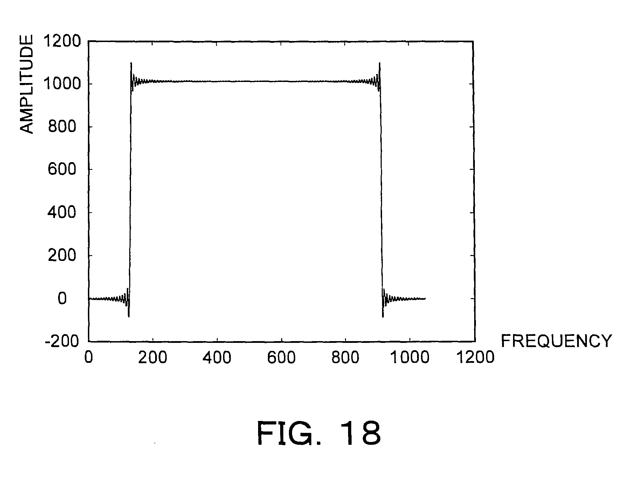

FIG. 18 is a diagram showing an example of a spectrum obtained by convolution of a signal to which the time window is applied and a signal of the time window.

FIG. 19 is a diagram showing an example of interpolation of the spectrum of a received signal to which the time window method is applied.

FIG. 20 is a diagram showing an example of an estimated error of an extrapolated portion when delay spread is small.

FIG. 21 is a diagram showing an example of an estimated error of an extrapolated portion when delay spread is large.

Explanations of Letters of Numerals

| 100 | Receiver |
|---|---|
| 101 | FFT section (fast Fourier transform section) |
| 102 | Code multiplication section |
| 103 | Subcarrier interpolation section (interpolator) |
| 104 | IFFT section (inverse fast Fourier transform section) |
| 105 | Noise removal section |
| 106 | FFT section |
| 107 | Complex conjugation section |
| 108 | Code generating section |
| 201, 401 | Selecting section |
| 202, 402 | Generating section |
| 203, 403 | Adding section |
| 404 | Interpolation number determining section |

Best Modes for Carrying Out the Invention

Next, embodiments of the present invention will be described below with reference to drawings. In each drawing, the same reference numerals are attached to the same constitution or components or equivalents having the same function, and a description thereof is omitted.

A signal band is a band in which a signal (information) is allocated to subcarriers among multicarrier symbols received by a receiver.

An FFT processing band is a band to be processed by FFT/IFFT and includes a signal band. While fast Fourier transform and inverse fast Fourier transform are used for a description below, the present invention can also be applied when discrete Fourier transform and inverse discrete Fourier transform are used.

(First embodiment)

In the first embodiment, extrapolation processing of a received signal is performed in an equal amplitude and equiphase difference. FIG. 1 is a block diagram showing an example of a component section related to channel estimation of a receiver in the first embodiment according to the present invention. A receiver 100 includes an FFT section (fast Fourier transform section) 101, a code multiplication section 102, a subcarrier interpolation section (interpolator) 103, an IFFT section (inverse fast Fourier transform section) 104, a noise removal section 105, an FFT section 106, a complex conjugation section 107, and a code generating section 108.

The receiver 100 receives multicarrier symbols modulated by a known code from a destination, performs predetermined conversion/synchronization processing (not shown in FIG. 1), and inputs CE (Channel Estimation) symbols into the FFT section 101.

The FFT section 101 converts the received CE signal from a time axis signal to a frequency axis signal. The converted frequency axis signal becomes first frequency information showing information on each subcarrier.

The code generating section 108 generates a known code used in a CE signal transmitted from the transmission side.

The complex conjugation section 107 generates a complex conjugate of a known code generated by the code generating section 108.

The code multiplication section 102 multiplies a complex conjugate of a CE symbol generated by the complex conjugation section 107 by a signal (first frequency information) converted by the FFT section 101 to make a conversion to a frequency response (second frequency information) of a channel. It is originally necessary to perform a complex division by a code used in CE symbols to determine a frequency response, but in the present embodiment and an embodiment described below, it is assumed that the amplitude of the code used in CE symbols is one to reduce the amount of computation and instead, a multiplication of complex conjugate is used in place of the complex division to determine frequency response. The frequency response is a frequency response of a channel containing noise and interference. The code multiplication section 102 (multiplication section) is used in place of a division section that calculates second frequency information on each subcarrier by complex dividing the first frequency information with a known code.

The subcarrier interpolation section 103 calculates interpolation frequency information by extrapolating a signal outside the band in the frequency response converted by the code multiplication section 102 and then calculates a frequency response (third frequency information) in which the signal outside the signal band is extrapolated by interpolating the calculated interpolation frequency information to a frequency response (second frequency information) calculated by the code multiplication section 102.

The IFFT section 104 converts a frequency response (third frequency information) in which a signal outside the signal band is extrapolated into a time axis signal.

The noise removal section 105 removes interference/noise components from a frequency response after being converted into a time axis signal by using a time window. A signal of frequency response after being converted into a time axis signal by the IFFT section 104 is an impulse response containing noise and interference. An impulse response by CE symbols is concentrated within a time determined when a radio circuit was designed in advance, that is, a time corresponding to a guard interval and interference or noise components are distributed in other intervals. Thus, the noise removal section 105 cuts out only data in an interval in which an impulse response is concentrated, generally within a time corresponding to the guard interval using a time window to reduce interference and noise components.

The FFT section 106 converts an impulse response after time window processing being performed into a frequency axis signal to determine a frequency response in which interference and noise are reduced.

Next, an operation of the subcarrier interpolation section 103 will be described. FIG. 2 is a block diagram showing a configuration example of subcarrier interpolation section 103 in the present embodiment. The subcarrier interpolation section 103 shown in FIG. 2 includes a selecting section 201, a generating section 202, and an adding section 203.

The selecting section 201 selects a signal necessary to generate an extrapolated signal from a frequency response input from the code multiplication section 102 as estimation data and sends the signal to the generating section 202.

The generating section 202 estimates (calculates) extrapolation data outside the signal band from the estimation data selected by the selecting section 201 to generate interpolation frequency information.

The adding section 203 adds a frequency response input from the code multiplication section 102 to interpolation frequency information (estimated extrapolation data outside the signal band) generated by the generating section 202. The added result is defined as third frequency information.

As cases in which a signal whose amplitude is constant at all extrapolated points so that an error should not become too large when the number of extrapolated points is increased, (1) and (2) below will be described:

> (1) when the value at which amplitudes of a plurality of pieces of information interpolated by the generating section 202 are identical is calculated, or
> (2) when information interpolated by the generating section 202 calculates a phase difference of signal points between two subcarriers. Methods of (1) and (2) may be carried out separately or in a combination of both. As an example, two methods will be described: a method of using values of signal points at signal band ends unchanged as a signal whose amplitude value is constant and a method of extrapolating the value that holds an amplitude value at a signal point at a signal band end unchanged and further holds a phase difference at the signal band end.

First, the case in which extrapolation data outside the signal band is estimated using the value at signal band ends will be described. FIG. 3 is a diagram showing an example of estimating extrapolation data outside a signal band using values at signal band ends. FIG. 3 shows a case in which FFT/IFFT points are arranged at 1024 points of -512 to 511 and subcarriers at 768 points of -384 to 383. The vertical axis shows the amplitude and the horizontal axis the subcarrier number, and the subcarrier number is the same as the subcarrier number (point number), which is the number indicating the point when FFT/IFFT processing is performed.

A portion (band) indicated by a solid line in FIG. 3 is a frequency response input from the code multiplication section 102 to the subcarrier interpolation section 103. The selecting section 210 selects the signal -384 and the signal 383 at signal band ends and sends the signals to the generating section 202. The generating section 202 sets the value of the signal -384 to the signals -512 to -385 and the value of the signal 383 to the signals 384 to 511 to create extrapolation data. The created extrapolation data is denoted by dotted lines in FIG. 3. A frequency response after interpolation combining a frequency response input into the adding section 203 and the extrapolation data is created. The FFT section 106 can obtain channel information whose distortion is reduced by time window processing being performed on the frequency response after interpolation by the noise removal section 105.

FIG. 3 shows an example in which extrapolation processing is performed on all unused points, but the subcarrier interpolation section 103 may extrapolate a portion of unused points, for example, only -448 to -385 and 384 to 447. If delay spread is very large and fluctuations thereof in the frequency domain are large, it may be better not to perform extrapolation processing on all unused points. Moreover, the value of the adjacent subcarrier is used as extrapolation data in FIG. 3, but the present embodiment is not limited to this. Extrapolation data may be calculated by using a value obtained by averaging amplitudes of a plurality of subcarriers at signal band ends or extrapolation data may be created by using a predetermined value, the value of a predetermined subcarrier in the signal band or the like. For example, an average value of amplitudes of a plurality of subcarriers near a signal band end may be used.

Next, the method of extrapolating values holding a phase difference at a signal band end will be described. Though amplitudes need not necessarily be equal when values holding a phase difference are extrapolated, it is assumed in the present embodiment that extrapolated values have equal amplitudes to make a description simpler. Arrangement of FFT/IFFT points and subcarriers is the same as described above. FIG. 4 is a diagram showing an example of estimating extrapolation data outside the signal band using values holding a phase difference at signal band ends. The horizontal axis is I (real number component) and the vertical axis is Q (imaginary number component). In FIG. 4, only one side of the signal band, that is, the point 383 side is shown. In reality, processing needs to be performed on both sides of the band. Processing can be performed in the same manner as in FIG. 4 for the point -384, which is the other end of the signal band.

First, the selecting section 201 selects two points at each signal band end for estimation, 382 and 383, and -383 and 384 and sends these points to the generating section 202. Processing by the generating section 202 will be described by starting with processing on the point 383 side.

First, a phase difference between two points from data of the points 382 and 383 is determined. The phase difference is denoted as θ. Next, data to be extrapolated to the point 384 is generated by using data of the point 383 and θ. This point is a point having the same amplitude as that of the point 383 and whose phase difference is θ leading and is obtained by multiplying the point 383 on a complex plane by a rotation matrix R;

$$ R = \begin{pmatrix} \cos\theta & -\sin\theta \\ \sin\theta & \cos\theta \end{pmatrix} . $$

Similarly, the point θ leading from the point 384 is determined as the point 385 and further the point 386, the point 387, ... are sequentially calculated to determine necessary extrapolated points. On the point -384 side, similarly a phase difference θ' between the point -384 and the point -383 is determined and further similar calculations may be carried out.

Extrapolation data thus determined becomes characteristics of channel estimation which have a smaller error near the signal band and are impervious to an influence of delay spread.

This time, continuous two points at signal band ends are used to determine a phase difference at signal band ends, but the phase difference may be determined by using two discontinuous points or an average phase difference may be determined by using more than two points. In FIG. 4, amplitudes are assumed to be equal and thus, values of each point are present on a circle.

Here, FIG. 5 shows a characteristic example of channel estimation of general linear interpolation, equivalence interpolation using values at band ends, and equiphase difference interpolation maintaining a phase difference at band ends. FIG. 5 shows data comparing characteristics of channel estimation of these interpolation methods by simulation and is obtained by evaluating estimated precision of a channel by means of an average vector error/EVM (Error Vector Magnitude) by changing the interpolation number under conditions of relatively high SNR of 30 dB and relatively larger delay spread of 450 ns. In the graph in FIG. 5, a result of linear interpolation is indicated by a solid line, that of equivalence interpolation by a doted line, and that of equiphase difference interpolation by a chain double-dashed line. As is evident from the graph, under conditions of large delay spread, an error of an interpolation portion grows with an increasing interpolation number when linear interpolation is used so that characteristics are degraded, in contrast to linear interpolation, characteristics are not degraded when equivalence interpolation is used even if the interpolation number increases, and equiphase difference interpolation has better characteristics than equivalence interpolation and characteristics thereof are excellent when the interpolation number is small.

According to the present invention, as described above, deterioration of characteristics of channel estimation can be suppressed by estimating extrapolation data using an amplitude equal to that of data of subcarriers at signal band ends or the same value as a phase difference formed by data of a plurality of subcarriers at signal band ends. Since the amount of computation required for a series of processing is very small when compared with a conventional technology, loads of processing can be reduced.

In the present embodiment, when the phase differences at signal band ends are made the same value, the amplitudes are made equal as an example for description, but the present embodiment is not limited to this. While the phase difference is made equal, the amplitude may be made to decrease (increase). For example, the amplitude at signal band ends may be decreased (increased) to zero.

(Second embodiment)

In the second embodiment, a method of changing the interpolation number depending on receiving conditions will be described. As described in the previous embodiment, an error between an estimated value and an actual value may become large by estimating a point apart from the signal band for extrapolation when delay spread is large and in such a case, characteristics will deteriorate if the extrapolation number is increased. To prevent such situations, the extrapolation number may be decreased when delay spread is large and the extrapolation number may be increased when delay spread is small. However, processing of very high computation costs, such as calculation of correlation coefficient, is needed to estimate delay spread. In the present embodiment, a method of very low computation costs to determine the extrapolation number will be described.

In the present embodiment, the extrapolation number is changed depending on the inclination at a band end of the amplitude of a frequency response signal before time window processing. An overview of the processing is shown in FIG. 6 and FIG. 7.

Various methods to determine the inclination, which serves as an index to determine the extrapolation number, can be considered and in the present embodiment, an absolute value of the inclination determined by using the absolute value of the amplitude of a frequency response signal is used as the inclination serving as an index to determine the extrapolation number. FIG. 6 shows an example of the signal band when delay spread is small and the inclination at signal band ends is small, and FIG. 7 shows an example of the signal band when delay spread is large and the inclination at signal band ends is large. Though delay spread and the magnitude of inclination cannot be exactly determined to be correlated, they are sufficiently usable as an index to determine the extrapolation number because the value represents fluctuations in the frequency domain near the signal band end.

A configuration example to realize the above processing will be described. The overall configuration is similar to that of the first embodiment in FIG. 1, but the configuration of the subcarrier interpolation section 103 is different. FIG. 8 is a block diagram showing a configuration example of a subcarrier interpolation section 400 in the second embodiment. A receiver in the present embodiment realizes the present embodiment by the subcarrier interpolation section 400 shown in FIG. 8 in place of the subcarrier interpolation section 103 in FIG. 1. The subcarrier interpolation section 400 shown in FIG. 8 includes a selecting section 401, a generating section 402, an adding section 403, and an interpolation number determining section 404.

The selecting section 401 selects (extracts) data necessary to determine the interpolation number (extrapolation number) and data necessary to estimate extrapolation data outside the signal band, from a frequency response signal before time window processing. The data necessary for determination of the interpolation number and that necessary for estimating extrapolation data may be the same or different.

The generating section 402 estimates (calculates) extrapolation data of the interpolation number determined by the interpolation number determining section 404 from output of the selecting section 401, and generates interpolation frequency information.

The adding section 403 adds a frequency response input from the code multiplication section 102 to interpolation number frequency information (estimated extrapolation data outside the signal band) generated by the generating section 402. The addition result is defined as third frequency information.

The interpolation number determining section 404 determines the number of pieces of extrapolation data (interpolation number for interpolating the signal band) estimated from output of the selecting section 401.

An operation of the interpolation number determining section 404 when subcarrier arrangement (signal band) shown in FIG. 3, similar to that in the first embodiment, is adopted will be described. The selecting section 401 inputs data of subcarriers at the points 383, 382, -383, and -384 into the interpolation number determining section 404. The interpolation number determining section 404 determines an absolute value of the inclination of the amplitude from a combination of the points 383 and 382 and that of the points -383 and -384. Since the point interval is one, the absolute value of the inclination can be determined only by subtraction processing and absolute value processing like

$$\left| P_{383} - P_{382} \right| \ .$$

$P_n$ (n is a subcarrier number) is the value of the amplitude of a subcarrier number n.

The interpolation number determining section 404 determines the interpolation number (extrapolation number) depending on the magnitude of the absolute value of the determined inclination. By calculating an appropriate threshold and comparing with the calculated threshold, the interpolation number may be increased as the absolute value of the inclination becomes smaller and may be decreased as the absolute value of the inclination becomes larger. The appropriate threshold is a value dependent on constitution of other blocks such as the subcarrier interval and extrapolation method. The generating section 402 calculates the value of as many pieces of extrapolation data as the interpolation number determined by the interpolation number determining section 404 in order of the subcarrier number (point number) from a signal band end to generate interpolation frequency information. The extrapolation method used by the generating section 402 may be the method shown in the first embodiment or the linear interpolation.

FIG. 9 shows an example of simulation when the present embodiment is applied for linear interpolation. This simulation result is obtained in an environment of a relatively high SNR of 30 dB. FIG. 9 shows that if the present embodiment is applied, excellent characteristics can be maintained by selecting the almost optimal extrapolation number when delay spread changes.

According to the present embodiment, as described above, deterioration of characteristics of channel estimation during extrapolation can be suppressed by determining the number of pieces of extrapolation data based on the inclination formed by data of a plurality of subcarriers at signal band ends.

Two continuous points at band ends are used in the present embodiment to determine the inclination, but points need not necessarily be continuous and three or more points may be used to determine the inclination, in which case an average of inclinations may be determined from these points. The extrapolation number may be determined adjusting to each inclination in both bands or adjusting to one side, for example, to a larger (smaller) inclination.

In the present embodiment, a case in which the interpolation number determining section 404 determines the interpolation number for interpolation based on the inclination between a signal point of a subcarrier at a signal band end and that of another subcarrier and the generating section 402 calculates as many values as the number of interpolations, but the extrapolation method used by the generating section 402 may use one of the two extrapolation methods described in the first embodiment or both. Moreover, the generating section 402 may use other extrapolation methods such as the linear interpolation method.

(Third embodiment)

In the third embodiment, extrapolation data is estimated by dividing an extrapolation area between the FFT processing band and signal band into a plurality of areas and applying different extrapolation methods.

First, an example disclosed by Non-Patent Document 1 in which an extrapolation area between the FFT processing band and signal band is estimated will be described. FIG. 10 is a diagram showing a conventional example of estimating the extrapolation area between the FFT processing band and signal band. The amplitude of a signal band 601 is denoted by a solid line and that of the extrapolation area, which is a difference between an FFT processing band 602 and a signal band 601, by a dotted line.

The method shown in FIG. 10 is basically to apply linear interpolation 603 to areas of the FFT processing band 602 outside the signal band 601. However, extrapolation points are adjusted so that the extrapolation points on both sides of the band are connected at points 605 where the amplitudes on both sides of the FFT processing band 602 are zero. An adjusted result is shown as reference numeral 604.

According to the method shown in FIG. 10, signal points are connected at both ends of the FFT processing band 602 and thus, there is an effect of reducing distortion that occurs when the sampling points are shifted during reception and during transmission, but there is a problem that characteristics deteriorate when delay spread is large because an error at extrapolation points apart from the signal band becomes large.

The present invention improves characteristics when delay spread is large by combining the method shown in FIG. 10 and the extrapolation method described in the first embodiment or the second embodiment. FIG. 11 is a diagram showing an overview of estimating the extrapolation area between the FFT processing band and signal band in the present embodiment.

In the present embodiment, areas (extrapolation areas) other than a signal band 801 in an FFT processing band 802 are divided into two portions for processing. The extrapolation areas are divided, for example, by the generating section 202/402. The generating section 202/402 can apply different extrapolation methods to divided areas. One is an area A on the signal band side (an area nearer to the signal band) and the other is the other area called an area B. Extrapolation of the equal amplitude shown in the first embodiment is performed on the area A and extrapolation processing is performed on the area B so that signal points at both ends of the areas A are connected at predetermined one point 803 on each of both ends of the FFT processing band. Any method shown in the first embodiment may be used as extrapolation processing of the area A. The size of the area A may be a predetermined size set in advance or may be changed by the method shown in the second embodiment. The extrapolation method of the area B may be linear interpolation or an extrapolation method via a point set in advance as shown in Non-Patent Document 1.

An influence by delay spread inside the area A can be reduced by dividing areas as shown in FIG. 11 and performing extrapolation and distortion when the sampling point is shifted can be reduced in the area B by connecting signal points at both ends of the FFT processing band 801 and therefore, shifting of the sampling point can be dealt with while reducing an influence of delay spread.

By dividing extrapolation areas into a plurality of areas and applying the extrapolation method shown in the first embodiment to a portion of the areas, as described above, characteristics of channel estimation can be improved.

In the present embodiment, each extrapolation area is divided into two areas. However, the extrapolation area may be divided into more areas and the extrapolation method shown in the first embodiment may be applied to a portion thereof.

**Claims**

1. A receiver (100) receiving a multicarrier symbol modulated by a known code, comprising:

    a fast Fourier transform section (101) for subjecting the multicarrier symbol to fast Fourier transform so as to calculate first frequency information on each subcarrier included in a signal band to which a signal is allocated;
    a division section (102) for complex dividing the first frequency information with the known code so as to calculate second frequency information on each subcarrier;
    a subcarrier interpolation section (103) for calculating an amplitude value at which the amplitude values of a plurality of pieces of information to be interpolated are identical based on said second frequency information, generating interpolation frequency information to interpolate information on frequencies to which no signal is allocated using the calculated amplitude value, and interpolating the generated interpolation frequency information to said second frequency information so as to calculate third frequency information; and
    an inverse fast Fourier transform section (104) for subjecting said third frequency information to inverse fast Fourier transform.

21     **EP 2 037 607 A1**     22

**2.** The receiver (100) according to claim 1, wherein said subcarrier interpolation section (103) calculates a phase difference equal to that of signal points between two subcarriers as a phase difference of a plurality pieces of information to be interpolated based on said second frequency information so as to generate interpolation frequency information to interpolate information of frequencies to which no signal is allocated using said calculated amplitude value and said phase difference.

**3.** A receiver (100) receiving a multicarrier symbol modulated by a known code, comprising:

a fast Fourier transform section (101) for subjecting said multicarrier symbol to fast Fourier transform so as to calculate first frequency information on each subcarrier included in a signal band to which a signal is allocated;

a division section (102) for complex dividing said first frequency information with said known code so as to calculate second frequency information on each subcarrier;

a subcarrier interpolation section (103) for calculating a phase difference equal to that of signal points between two subcarriers as a phase difference of a plurality of pieces of information to be interpolated based on said second frequency information, generating interpolation frequency information to interpolate information on frequencies to which no signal is allocated using the calculated phase difference, and interpolating the generated interpolation frequency information to said second frequency information so as to calculate third frequency information; and

an inverse fast Fourier transform section (104) for subjecting said third frequency information to inverse fast Fourier transform.

**4.** The receiver according to claim 1 or 2, wherein said subcarrier interpolation section (103) calculates a value of a signal point at said signal band end as said interpolation frequency information.

**5.** The receiver according to claim 1 or 2, wherein said subcarrier interpolation section (103) determines a number of subcarriers to interpolate information as an interpolation number based on an inclination between a signal point of a subcarrier near said signal band end and that of another subcarrier so as to generate information to interpolate as many subcarriers as the determined interpolation number as said interpolation frequency information.

**6.** The receiver according to claim 1 or 2, wherein said subcarrier interpolation section (103) includes:

a selecting section (201) for selecting information to be a reference for calculating said interpolation frequency information from said second frequency information;

a generating section (202) for calculating said amplitude value based on information selected by said selecting section so as to generate interpolation frequency information; and

an adding section (203) for adding the generated interpolation frequency information to said second frequency information so as to calculate third frequency information.

**7.** The receiver according to claim 5, wherein said subcarrier interpolation section (103) includes:

a selecting section (401) for selecting information to be a reference for calculating said interpolation frequency information from said second frequency information and information to be a reference for determining said interpolation number;

an interpolation number determining section (404) for calculating said inclination based on information to be a reference for determining said interpolation number selected by said selecting section so as to determine said interpolation number;

a generating section (402) for calculating said amplitude value corresponding to said determined interpolation number based on information to be a reference for calculating said interpolation frequency information selected by said selecting section so as to generate interpolation frequency information; and

an adding section (403) for adding the generated interpolation frequency information to said second frequency information so as to calculate third frequency information.

**8.** The receiver according to claim 1 or 2, wherein said subcarrier interpolation section (103) divides a band of frequencies to which said signal is not allocated into a plurality of areas so as to generate said interpolation frequency information using said amplitude value for at least one of the divided areas.

**9.** A receiver (100) receiving a multicarrier symbol modulated by a known code, comprising:

a division section (102) for subjecting said multicarrier symbol to fast Fourier transform, and complex dividing first frequency information on each subcarrier included in a signal band to which a signal is allocated so as to calculate second frequency information on each subcarrier;

a subcarrier interpolation section (103) for determining a number of subcarriers to interpolate

**12**

information as an interpolation number based on an inclination between a signal point of a subcarrier near said signal band end and that of another subcarrier, and interpolating information to be interpolated to as many subcarriers as the determined interpolation number to said second frequency information so as to calculate third frequency information; and

an inverse fast Fourier transform section (104) for subjecting said third frequency information to inverse fast Fourier transform.

10. The receiver according to claim 9, wherein said subcarrier interpolation section (103) includes:

a selecting section (401) for selecting information to be a reference for determining said interpolation number from said second frequency information;

an interpolation number determining section (404) for calculating said inclination based on the information selected by said selecting section so as to determine said interpolation number;

a generating section (402) for calculating information on said interpolation number so as to generate interpolation frequency information; and

an adding section (403) for adding the generated interpolation frequency information to said second frequency information so as to calculate third frequency information.

11. A channel estimation method of a receiving apparatus receiving a multicarrier symbol modulated by a known code, comprising the steps of:

subjecting said multicarrier symbol to fast Fourier transform so as to calculate first frequency information on each subcarrier included in a signal band to which a signal is allocated;

complex dividing said first frequency information with said known code so as to calculate second frequency information on each subcarrier;

based on said second frequency information, using at least one of

(1) calculating an amplitude value at which the amplitude values of a plurality of pieces of information to be interpolated are identical, and

(2) calculating a phase difference equal to that of signal points between two subcarriers as a phase difference of a plurality of pieces of information to be interpolated, so as to generate interpolation frequency information to interpolate information on frequencies to which no signal is allocated;

interpolating the generated interpolation frequency information to said second frequency information so as to calculate third frequency information; and

subjecting said third frequency information to inverse fast Fourier transform.

12. A channel estimation method of a receiving apparatus receiving a multicarrier symbol modulated by a known code, comprising the steps of:

subjecting said multicarrier symbol to fast Fourier transform;

complex dividing first frequency information on each subcarrier included in a signal band to which a signal is allocated so as to calculate second frequency information on each subcarrier;

determining a number of subcarriers to interpolate information as an interpolation number based on an inclination between a signal point of a subcarrier near said signal band end and that of another subcarrier;

interpolating information to be interpolated to as many subcarriers as the determined interpolation number to said second frequency information so as to calculate third frequency information; and

subjecting said third frequency information to inverse fast Fourier transform.

FIG. 1

103 : SUBCARRIER INTERPOLATION SECTION

FIG. 2

FIG. 3

FIG. 4

FIG. 5

FIG. 6

FIG. 7

400 : SUBCARRIER INTERPOLATION SECTION

FIG. 8

FIG. 9

EP 2 037 607 A1

FIG. 10

FIG. 11

FIG. 12

FIG. 13

FIG. 14

FIG. 15

FIG. 16

FIG. 17

FIG. 18

FIG. 19

FIG. 20

FIG. 21

<table>
<tr><td colspan="2" align="center">**INTERNATIONAL SEARCH REPORT**</td><td>International application No.<br>PCT/JP2007/060719</td></tr>
</table>

| A. CLASSIFICATION OF SUBJECT MATTER |
|---|
| $H04J11/00$ (2006.01)i, $H04B7/005$ (2006.01)i |

According to International Patent Classification (IPC) or to both national classification and IPC

| B. FIELDS SEARCHED |
|---|

Minimum documentation searched (classification system followed by classification symbols)
H04J11/00, H04B7/005

Documentation searched other than minimum documentation to the extent that such documents are included in the fields searched
Jitsuyo Shinan Koho 1922-1996 Jitsuyo Shinan Toroku Koho 1996-2007
Kokai Jitsuyo Shinan Koho 1971-2007 Toroku Jitsuyo Shinan Koho 1994-2007

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP 2005-151447 A (Matsushita Electric Industrial Co., Ltd.), 09 June, 2005 (09.06.05), Full text; all drawings & EP 1533961 A2 & CN 1620052 A | 1-12 |
| A | WO 2003/098853 A1 (Matsushita Electric Industrial Co., Ltd.), 27 November, 2003 (27.11.03), Full text; all drawings & EP 1551120 A1 & US 2005/0174929 A1 & TW 200401522 A | 1-12 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>06 August, 2007 (06.08.07) | Date of mailing of the international search report<br>14 August, 2007 (14.08.07) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2007/060719

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2003-229831 A  (Hitachi Kokusai Electric Inc.),<br>15 August, 2003 (15.08.03),<br>Full text; all drawings<br>(Family: none) | 1-12 |
| A | JP 2002-009726 A  (Hitachi Kokusai Electric Inc.),<br>11 January, 2002 (11.01.02),<br>Full text; all drawings<br>(Family: none) | 1-12 |
| A | JP 2002-300094 A  (Matsushita Electric Industrial Co., Ltd.),<br>11 October, 2002 (11.10.02),<br>Full text; all drawings<br>(Family: none) | 1-12 |
| A | WO 2005/064870 A2  (QUALCOMM INC.),<br>14 July, 2005 (14.07.05),<br>Full text; all drawings<br>& EP 1698129 A0        & EP 1698129 A2<br>& EP 1698129 A3        & US 2005/0135509 A1<br>& AU 2004308135 A1     & BR 200417743 A<br>& JP 2007-515899 A | 1-12 |
| A | JP 2005-229466 A  (Pioneer Electronic Corp.),<br>25 August, 2005 (25.08.05),<br>Full text; all drawings<br>& EP 1564946 A2        & US 2005/0180517 A1<br>& JP 3802031 B2        & CN 1658605 A | 1-12 |
| A | JP 2005-167594 A  (Matsushita Electric Industrial Co., Ltd.),<br>23 June, 2005 (23.06.05),<br>Full text; all drawings<br>(Family: none) | 1-12 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- 2006 B-5-94 OFDM channel estimation method using virtual waveform addition. *IEICE,* 08 March 2006, 447

- 2006 B-5-93 Discussion about distortion when the channel is estimated by the time window method. *IEICE,* 08 March 2006, 446